# FASCICULE DE BREVET EUROPEEN

(11) **EP 0 968 481 B1**
(45) Date de publication et mention de la délivrance du brevet: **06.11.2002**
(21) Numéro de dépôt: 98914924.0
(22) Date de dépôt: 16.03.1998
(51) Int. Cl.: G06K 7/00, G06K 13/08

(54) **CONNECTEUR POUR LECTEUR DE CARTE COMPORTANT UN DISPOSITIF D'ELIMINATION DES CHARGES ELECTROSTATIQUES**
KARTENLESERVERBINDER MIT EINER VORRICHTUNG ZUR AUSSCHALTUNG STATISCHER AUFLADUNGEN
CARD READER CONNECTOR COMPRISING A DEVICE FOR ELIMINATING ELECTROSTATIC CHARGING

(30) Priorité: 20.03.1997 FR 9703421
(43) Date de publication de la demande: 05.01.2000
(73) Titulaire: FCI, 75009 Paris (FR)
(72) Inventeur: ODIC, Emmanuel, F-25300 Pontarlier (FR)
(74) Mandataire: Somnier, Jean-Louis
(86) Numéro de dépôt international: FR9800524
(87) Numéro de publication internationale: WO98043198

(56) Documents cités:
- EP-A- 0 482 548
- WO-A-95/12336
- PATENT ABSTRACTS OF JAPAN vol. 13, no. 17 (P-813), 17 janvier 1989 & JP 63 222364 A (TOSHIBA CORP), 16 septembre 1988,

## Description

La présente invention concerne un connecteur pour lecteur de carte à microcircuit comprenant un cadre en matière électriquement isolante portant des contacts balais susceptibles d'établir une connexion électrique avec le microcircuit de la carte.

De tels connecteurs ont été décrits par exemple dans le brevet français 87 15 739 et la demande de brevet français 95 06 854 au nom de la demanderesse.

Le EP-A-0 482 548 montre un connecteur pour lecteur de carte à microcircuit comprenant les caractéristiques du préambule de la revendication 1 de la demande. Ce document prévoit aussi la possibilité de mettre en place sur la face avant du connecteur un dispositif de décharge électrostatique, afin de supprimer toute décharge provoquée par l'électricité statique se trouvant éventuellement sur la carte à puce. Ce dispositif est constitué d'un revêtement conducteur déposé sur une portion de la face avant du cadre et relié à la masse.

Le JP-A-632 22 364 montre un lecteur de carte magnétique comprenant un dispositif de décharge électrostatique qui est constitué d'une brosse logée à proximité de la fente d'insertion de la carte.

Le problème qui est à la base de la présente invention est de pouvoir éliminer efficacement les charges électrostatiques portées par la carte à microcircuit pour éviter que la décharge ne se fasse par l'intermédiaire des contacts balais du cadre, ce qui pourrait détériorer le circuit électronique du lecteur.

L'invention vise ainsi un connecteur pour lecteur de carte à microcircuit comprenant un cadre en matière électriquement isolante portant des contacts balais, ce cadre étant logé dans un capot en matière plastique comportant sur l'un de ses côtés une ouverture allongée permettant d'introduire la carte à microcircuit à l'intérieur du capot.

Suivant l'invention, ce connecteur est caractérisé en ce que cette ouverture porte au moins une lame dont l'arête est susceptible de frotter sur la surface de la carte à microcircuit lors de son introduction dans cette ouverture pour éliminer les charges électrostatiques portées par cette carte.

En frottant sur la carte, l'arête de la lame favorise l'écoulement, par effet dit de pointe ou de couronne, des charges électrostatiques portées par la carte.

De préférence, ladite lame est en matière plastique chargée de particules conductrices et est reliée à la masse du connecteur.

Avantageusement, la lame est moulée d'une seule pièce avec le capot, la totalité de celui-ci étant en matière plastique chargée par exemple de carbone (tout autre élément conducteur électrique pouvant être utilisé).

Selon une version préférée de l'invention, l'ouverture allongée du capot porte deux lames parallèles disposées en regard l'une de l'autre pour pouvoir frotter sur les deux surfaces opposées de la carte à microcircuit lors de son introduction dans cette ouverture.

Cette disposition permet d'éliminer les charges électrostatiques présentes sur les deux faces de la carte.

De préférence l'une des lames est flexible pour pouvoir fléchir lors de l'introduction de la carte.

Cette disposition permet d'obtenir un frottement efficace des lames sur les deux faces de la carte et de prendre en compte les tolérances de fabrication relatives à l'épaisseur de la carte.

D'autres particularités et avantages de l'invention apparaîtront encore dans la description ci-après.

Aux dessins annexés donnés à titre d'exemples non limitatifs:
- la figure 1 est une vue en perspective du cadre porte-contacts d'un connecteur selon l'invention,
- la figure 2 est une vue en perspective d'un connecteur selon l'invention,
- la figure 3 est une vue de dessus d'un connecteur selon l'invention,
- la figure 4 est une vue frontale du connecteur selon la figure 3,
- la figure 5 est une vue en coupe longitudinale de la partie supérieure du capot du connecteur selon la figure 3,
- la figure 6 est une vue en plan de la partie inférieure du capot du connecteur,
- la figure 7 est une vue en coupe selon la plan VII-VII de la figure 4.

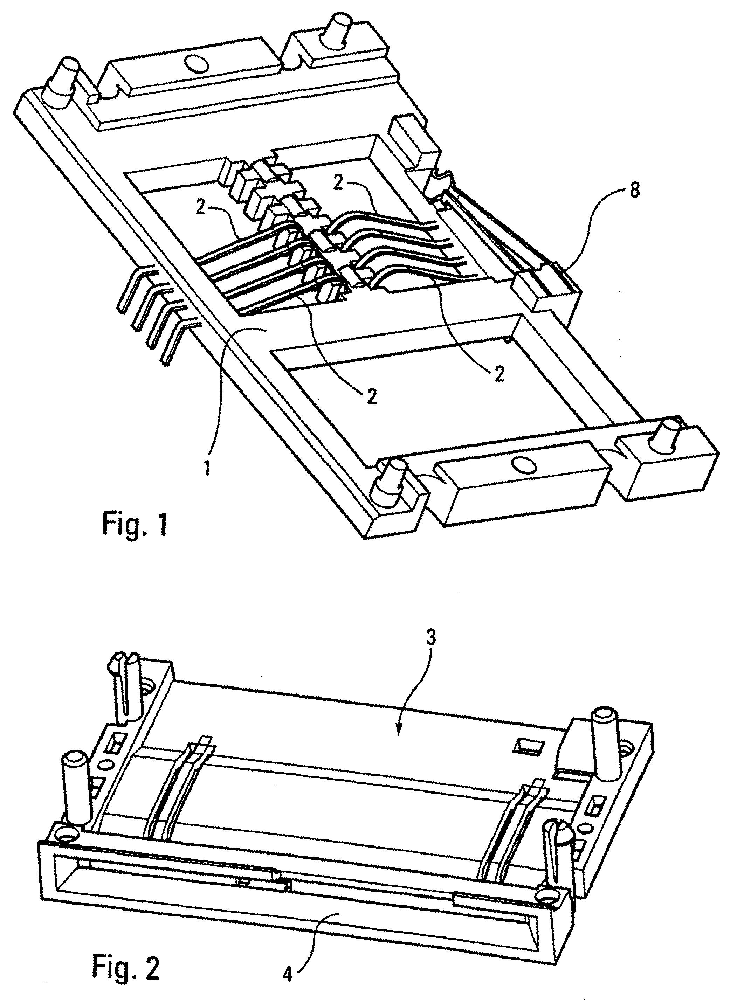

En référence aux dessins annexés, le connecteur pour lecteur de carte à microcircuit comprend (voir figure 1) un cadre 1 en matière électriquement isolante portant des contacts balais 2. Ce cadre 1 est logé (voir figure 2) dans un capot 3 en matière plastique comportant sur l'un de ses côtés, une ouverture allongée 4 en forme de fente (voir figures 2, 4 et 7) permettant d'introduire la carte à microcircuit à l'intérieur du capot 3.

Conformément à l'invention cette ouverture 4 porte au moins une lame 5 dont l'arête (5a) est susceptible de frotter sur la surface de la carte à microcircuit lors de son introduction dans cette ouverture 4 pour éliminer les charges électrostatiques portées par cette carte.

Cette lame 5 est de préférence en matière plastique chargée de particules conductrices et est reliée de préférence à la masse du connecteur.

Dans l'exemple représenté, la lame 5 est moulée d'une seule pièce avec le capot 3, la totalité de celui-ci étant en matière plastique chargée de carbone.

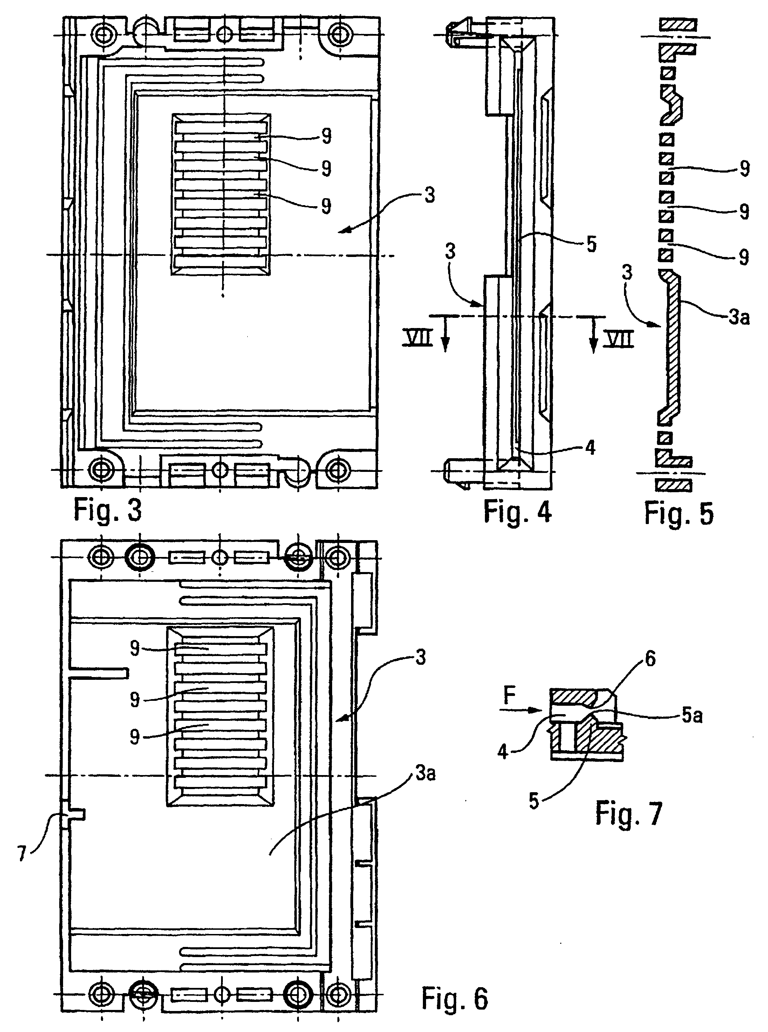

Dans cet exemple également, l'ouverture allongée 4 du capot 3 porte deux lames parallèles 5, 6 disposées en regard l'une de l'autre, perpendiculairement à la direction F (voir figure 7) d'introduction de la carte.

Ces deux lames 5, 6 peuvent ainsi frotter sur les deux surfaces opposées de la carte à microcircuit lors de son introduction dans l'ouverture 4.

Dans l'exemple de la figure 7, la lame inférieure 5 est flexible pour pouvoir fléchir vers l'extérieur du connecteur lors de l'introduction de la carte. La lame supérieure 6 est fixe et son arête devant frotter sur la carte est constituée par une nervure de faible épaisseur.

Pour pouvoir fléchir, la lame inférieure 5 est reliée au capot 3 par des languettes élastiques (non représentées) situées aux extrémités opposées de cette lame.

Par ailleurs, comme indiqué, la face inférieure 3a du capot 3 comporte à sa périphérie une surépaisseur 7 (voir figure 6) qui vient en contact avec la lame de contact 8 portée par le cadre 1 servant de contact de fin de course d'introduction de la carte dans le connecteur,permettant ainsi de la relier à la masse.

Dans la réalisation représentée sur les figures 3, 5 et 6, le capot 3 comporte des rainures 9 dans lesquelles peuvent venir se loger, sans toucher le capot 3, les contacts balais 2 portés par le cadre 1, lorsque la carte est absente.

Le dispositif que l'on vient de décrire fonctionne de la façon suivante:

Lors de l'introduction de la carte à microcircuit dans l'ouverture 4 en forme de fente, les surfaces supérieure et inférieure de la carte viennent respectivement en contact avec la lame supérieure 6 et la lame inférieure 5. La lame inférieure 5 du fait de son montage élastique fléchit vers l'extérieur du connecteur. Ainsi, lors du déplacement de la carte, les surfaces supérieure et inférieure frottent sur les arêtes des lames 6 et 7.

Les charges électrostatiques présentes sur la surface de la carte peuvent ainsi aisément s'écouler par effet dit de pointe, au niveau des arêtes vives des lames 5 et 6 et être évacuées du fait de la conductibilité de la matière plastique constituant le capot 3, vers le contact de fin de course 8 qui est relié à la masse, et éventuellement dans l'air par la partie haute fréquence.

On évite ainsi tout risque que la décharge ne s'effectue au niveau des contacts balais 2, ce qui pourrait détériorer le circuit électronique du lecteur de carte.

Du fait que les lames 5 et 6 soient moulées d'une seule pièce avec le capot 3 et que celui-ci soit chargé de particules conductrices, le dispositif selon l'invention peut être fabriqué en grande série dans des conditions très économiques.

Grâce aux rainures 9 ménagées dans le capot 3, en l'absence de la carte, les balais de contact 2 peuvent venir se loger dans ces rainures et ne risquent pas de toucher la matière conductrice du capot et provoquer un court-circuit.

Bien entendu l'invention n'est pas limitée à l'exemple que l'on vient de décrire et on peut apporter à celui-ci de nombreuses modifications sans sortir du cadre de l'invention.

## Revendications

1. Connecteur pour lecteur de carte à microcircuit comprenant un cadre (1) en matière électriquement isolante portant des contacts balais (2), ce cadre (1) étant logé dans un capot (3) en matière plastique comportant sur l'un de ses côtés une ouverture allongée (4) permettant d'introduire la carte à microcircuit à l'intérieur du capot (3), **caractérisé en ce que** cette ouverture (4) porte au moins une lame (5) dont l'arête est susceptible de frotter sur la surface de la carte à microcircuit lors de son introduction dans cette ouverture (4) pour éliminer les charges électrostatiques portées par cette carte.

2. Connecteur conforme à la revendication 1, **caractérisé en ce que** ladite lame (5) est en matière plastique chargée de particules conductrices et est reliée à la masse du connecteur.

3. Connecteur conforme à la revendication 2, **caractérisé en ce que** la lame (5) est moulée d'une seule pièce avec le capot (3), la totalité de celui-ci étant en matière plastique chargée de carbone.

4. Connecteur conforme à la revendication 3, **caractérisé en ce que** l'ouverture allongée (4) du capot (3) porte deux lames (5, 6) parallèles disposées en regard l'une de l'autre pour pouvoir frotter sur les deux surfaces opposées de la carte à microcircuit lors de son introduction dans cette ouverture (4).

5. Connecteur conforme à la revendication 4, **caractérisé en ce que** l'une (5) des lames est flexible pour pouvoir fléchir lors de l'introduction de la carte.

6. Connecteur conforme à la revendication 5, **caractérisé en ce que** la lame flexible (5) est reliée au capot (3) par des languettes élastiques situées aux extrémités opposées de cette lame.

7. Connecteur conforme à l'une des revendications 1 à 6, **caractérisé en ce que** le capot (3) comporte une surépaisseur (7) qui vient en contact avec la lame (8) de contact de fin de course d'introduction de la carte.

8. Connecteur conforme à l'une des revendications 1 à 7, **caractérisé en ce que** le capot (3) comporte des rainures (9) dans lesquelles viennent se loger, sans toucher le capot (3), les contacts balais (2) portés par le cadre (1), lorsque la carte est absente.

## Patentansprüche

1. Steckverbinder für einen Leser einer Chipkarte, der einen Rahmen aus elektrisch isolierendem Material mit Schleifkontakten (2) aufweist, wobei der Rahmen (1) in einer Blende (3) aus Plastikmaterial angeordnet ist, die auf einer ihrer Seiten eine Längsöffnung (4) für die Einführung der Chipkarte in das Innere der Blende ermöglicht,
**dadurch gekennzeichnet, daß**
diese Öffnung (4) mindestens eine Zunge (5) aufweist, deren Abschluß bei der Einführung der Chipkarte in diese Öffnung an der Oberfläche der Chipkarte reiben kann, um die von dieser Karte getragenen elektrostatischen Ladungen zu entfernen.

2. Steckverbinder nach Anspruch 1, **dadurch gekennzeichnet, daß** die Zunge (5) aus Plastikmaterial besteht, und mit leitenden Teilchen durchsetzt ist und an die Erdung des Steckverbinders angeschlossen ist.

3. Steckverbinder nach Anspruch 2, **dadurch gekennzeichnet, daß** die Zunge (5) einstückig mit der Blende (3) gegossen ist, wobei die gesamte Blende aus Plastikmaterial besteht, und mit Kohlenstoff versetzt ist.

4. Steckverbinder nach Anspruch 3, **dadurch gekennzeichnet, daß** die Längsöffnung (4) der Blende (3) zwei parallele Zungen (5, 6) aufweist, die einander gegenüberliegend angeordnet sind, um auf den zwei gegenüberliegenden Flächen der Chipkarte bei ihrer Einführung in die Öffnung (4) zu reiben.

5. Steckverbinder nach Anspruch 4, **dadurch gekennzeichnet, daß** eine der Zungen biegsam ist, damit sie sich bei der Einführung der Karte verbiegen kann.

6. Steckverbinder nach Anspruch 5, **dadurch gekennzeichnet, daß** die biegsame Zunge (5) durch elastische Lanzen mit der Blende (3) verbunden ist, die an gegenüberliegenden Enden dieser Zunge liegen.

7. Steckverbinder nach einem der Ansprüche 1 bis 6, **dadurch gekennzeichnet, daß** die Blende (3) eine Erhöhung (7) aufweist, die die Kontaktlamelle (8) für das Wegende der Eiführung der Karte berührt.

8. Steckverbinder nach einem der Ansprüche 1 bis 7, **dadurch gekennzeichnet, daß** die Blende (3) Rillen (9) aufweist, in denen die von dem Rahmen (1) getragenen Schleifkontakte (2) zu liegen kommen, ohne die Blende (3) zu berühren, wenn die Karte nicht vorhanden ist.

## Claims

1. Connector for a microcircuit card reader comprising a frame (1) made of electrically insulating material carrying wiper contacts (2), this frame (1) being housed in a case (3) made of plastic including, on one of its sides, an elongate aperture (4) making it possible to insert the microcircuit card inside the case (3), **characterized in that** this aperture (4) carries at least one strip (5) the edge of which is capable of rubbing on the surface of the microcircuit card when it is inserted into this aperture (4) in order to remove the electrostatic charges carried by this card.

2. Connector in accordance with Claim 1, **characterized in that** the said strip (5) is made of plastic loaded with conducting particles and is linked to the earth of the connector.

3. Connector in accordance with Claim 2, **characterized in that** the strip (5) is moulded in a . single piece with the case (3), the latter being made completely from plastic loaded with carbon.

4. Connector in accordance with Claim 3, **characterized in that** the elongate aperture (4) of the case (3) carries two parallel strips (5, 6) arranged facing one another so as to be able to rub on the two opposite surfaces of the microcircuit card when it is inserted into this aperture (4).

5. Connector in accordance with Claim 4, **characterized in that** one (5) of the strips is flexible so as to be able to bend during the insertion of the card.

6. Connector in accordance with Claim 5, **characterized in that** the flexible strip (5) is linked to the case (3) by elastic tabs situated at the opposite ends of this strip.

7. Connector in accordance with one of Claims 1 to 6, **characterized in that** the case (3) includes an over-thickness (7) which comes into contact with the contact strip (8) for the end of insertion travel of the card.

8. Connector in accordance with one of Claims 1 to 7, **characterized in that** the case (3) includes grooves (9) in which the wiper contacts (2) carried by the frame (1) are lodged, without touching the case (3), when the card is absent.
